(19) Europäisches Patentamt
European Patent Office
Office européen des brevets

(11) Veröffentlichungsnummer: **0 005 241**
**B1**

(12) # EUROPÄISCHE PATENTSCHRIFT

(45) Veröffentlichungstag der Patentschrift: **01.04.81**

(51) Int. Cl.³: **C 07 C 91/26, C 08 G 73/00, D 21 H 3/12**

(21) Anmeldenummer: **79101259.4**

(22) Anmeldetag: **26.04.79**

(54) **Quaternäre Dialkylammoniumgruppen enthaltende Polyalkylenpolyamine, Verfahren zu deren Herstellung und deren Verwendung als Hilfsmittel bei der Papierherstellung.**

(30) Priorität: **10.05.78 DE 2820488**

(43) Veröffentlichungstag der Anmeldung:
**14.11.79 Patentblatt 79/23**

(45) Bekanntmachung des Hinweises auf die Patenterteilung:
**01.04.81 Patentblatt 81/13**

(84) Benannte Vertragsstaaten:
**BE CH DE FR GB IT NL**

(56) Entgegenhaltungen:
**Fr - A - 2 298 358**
**US - A - 3 894 945**

(73) Patentinhaber: **BAYER AG**
**Zentralbereich Patente, Marken und Lizenzen**
**D-5090 Leverkusen 1, Bayerwerk (DE)**

(72) Erfinder: **Löbach, Wilfried, Dr.**
**Flutgraben 17**
**D-5300 Bonn 3 (DE)**
Erfinder: **Lehmann, Wolfgang, Dr.**
**Carl-Rumpff-Strasse 7**
**D-5090 Leverkusen 1 (DE)**
Erfinder: **Müller, Friedhelm, Dr.**
**Zum Hahnenberg 62**
**D-5068 Odenthal (DE)**

**EP 0 005 241 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Quaternäre Dialkylammoniumgruppen enthaltende Polyalkylenpolyamine, Verfahren zu deren Herstellung und deren Verwendung als Hilfsmittel bei der Papierherstellung

Die Erfindung betrifft wasserlösliche, nicht selbstvernetzende quaternäre Dialkylammoniumgruppen enthaltende Polyalkylenpolyamine, die durch Umsetzung von Polyalkylenpolyaminen der allgemeinen Formel

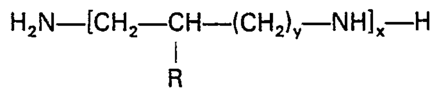
(I)

in der
R Wasserstoff oder Methyl,
Y gleich oder verschieden die Zahl 0 oder 1 und
x eine Zahl von 2 bis 15 bedeuten,
mit bifunktionellen Verbindungen ...er allgemeinen Formel

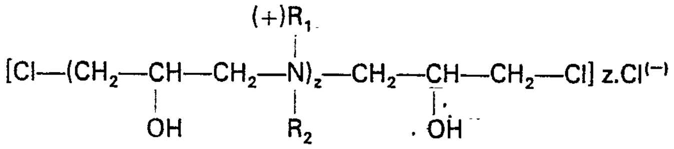
(II)

in der
z eine ganze Zahl von 1 bis 6,
$R_1$, $R_2$ niederes Alkyl oder niederes Hydroxyalkyl bedeuten,
hergestellt werden.

Die Erfindung betrifft ferner ein Verfahren zur Herstellung dieser Polyalkylenpolyamine und ihre Verwendung als Mittel zur Erhöhung der Retention von Fasern, Füllstoffen und Pigmenten sowie zur Beschleunigung der Entwässerung bei der Papierherstellung und zur Aufarbeitung von Papiermaschinenabwässern durch Filtration, Sedimentation und Flotation.

Aus der FR—PS 2 298 258 sind Retentionsmittel bekannt, die aus quaternären Stickstoff enthaltenden Polyaminen, basischen Polyaminoamiden unter Zusatz polyfunktioneller Verbindungen hergestellt werden.

Im Gegensatz dazu handelt es sich bei den erfindungsgemäßen Ret...onsmitteln gemäß vorliegender Anmeldung um Umsetzungsprodukte von Polyalkylenpolyaminen, insbesondere vom Polyethylenpolyaminen, (die z.B. durch Umsetzung von 1,2-Dichlorethan mit Ammoniak zu erhalten sind) mit vernetzenden bifunktionellen Verbindungen der Formel (II), (die durch Reaktion von HCl mit Epichlorhydrin und sekundären Aminen erhalten werden). Gegenüber den Retentionsmitteln aus FR—PS 2 298 358 zeigen die erfindungsgemäßen neuen Polyamine überraschende eine höhere Entwässerungsbeschleunigung im sauren bis neutralen bzw. schwach alkalischen Milieu.

Die neuen Polyalkylenpolyamine können auch durch Umsetzung von Mischungen der Amine I mit Aminen der gleichen Formel, in der x die Zahl 1 bedeutet, z.B. Ethylendiamin oder Propylendiamin-(1,2) mit bifunktionellen Verbindungen der Formel II hergestellt werden.

Als Polyalkylenpolyamine der Formel I seien vor allem die Polyethylenpolyamine genannt, bei denen y für null steht, z.B. Diethylentriamin, Dipropylentriamin, Triethylentetramin, Tripropylentetramin, Tetraethylenpentamin, Tetrapropylenpentamin, Pentaethylenhexamin, Pentapropylenhexamin, Hexaethylenheptamin, Hexapropylenheptamin, Heptaethylenoctamin, Heptapropylenoctamin, Pentaethylenpentamin, Octaethylenheptamin und deren Gemische, insbesondere aber

1) das bei der diskontinuierlichen (z.B Houben-Weyl, 4. Auf., XI/1, Seite 44) oder bei der kontinuierlichen (z.B. GB—PS 1 147 984, US—PS 1 832 534 und 2 049 467) Umsetzung von 1,2-Dichlorethan mit wäßrigem Ammoniak, gegebenenfalls in Gegenwart von zugesetztem Ethylendiamin oder Diethylentriamin (US—PS 2 769 841 und DE—OS 1 668 922) erhaltene Polyethylenpolyamingemisch, das erhebliche Anteile an Tetraethylenpentamin, Pentaethylenhexamin, Hexaethylenhexamin, Hexaethylenheptamin, Heptaethylenhexamin, Heptaethylenheptamin, Heptaethylenoctamin und höhere Amine und außerdem geringen Mengen cyclischer Amine wie Ethyl-piperazin enthält. Bei der Umsetzung werden beispielsweise pro Mol 1,2-Dichlorethan 6—30 Mol Ammoniak verwendet,
2) das nach Abdestillieren von Ethylendiamin, evtl. auch noch von Diethylentriamin aus dem gemäß 1) hergestellten Basengemisch verbleibende Polyethylenpolyamingemisch,
3) das nach Abdestillieren von Triethylentetramin aus dem gemäß 2) hergestellten Basengemisch verbleibende Polyethylenpolyamingemisch,

4) das nach Abdestillieren von Tetraethylenpentamin aus dem gemäß 3) hergestellten Basengemisch verbleibende Polyethylenpolyamingemisch,

5) die durch Polymerisation von 1,2-Alkyleniminen erhältlichen Polyethylenpolyamine.

Als weitere Polyalkylenpolyamine I seien noch genannt:

6) reine Polypropylenpolyamine und deren Gemische,

7) gemischte Polyethylenpolypropylenpolyamine und deren Gemische, vor allem die durch ein- bzw. mehrmalige Umsetzung von Ethylendiamin bzw. Propylendiamin-1,3 mit Acrylnitril und jeweils nachfolgender Hydrierung erhalten sind, z.B. die mehrwertigen Amine der Formel

$$H_2N—[CH_2—CH_2—CH_2—NH]_m—H \qquad (III)$$

wobei m eine ganze Zahl von 2 bis 10 bedeutet sowie diejenigen der Formel

$$H[HN—CH_2—CH_2—CH_2]_n—NH—CH_2—CH_2—NH—[CH_2—CH_2—CH_2—NH]_oH, \qquad (IV)$$

wobei n eine Zahl von 2 bis 5 und o eine Zahl von 0 bis 5 bedeuten.

Ferner können die Polyamine I in Mischung mit Aminen der Formel

$$Y—[(CH_2—CHR_3—CH_2—NH)_p—H]_q \qquad (V)$$

in der

Y für Sauerstoff, Schwefel oder den Rest einer jeweils Hydroxyl- und/oder Sulfhydrylgruppen aufweisenden und mindestens zweiwertigen Verbindung der aliphatischen, cycloaliphatischen, araliphatischen oder aromatischen Reihe steht,

$R_3$ Wasserstoff oder die Methylgruppe bedeutet,

p eine ganze Zahl von mindestens 1, vorzugsweise 1—3, ist und

q für eine ganze Zahl von mindestens 2, vorzugsweise 2—4, steht,

zu den erfindungsgemäßen Produkten umgesetzt werden.

Vertreter der Polyamine V sind beispielsweise Bis-[3-amino-propyl]-ether, Bis-[3-aminopropyl]-sulfid, Ethylenglykol-bis-[3-amino-propylether], Dithioethylenglykol-bis-[3-aminopropylether], Neopentylen-glykol-bis-[3-aminopropylether] und Hydrochinon-bis-[3-amino-propylether] sowie Amine der Formel

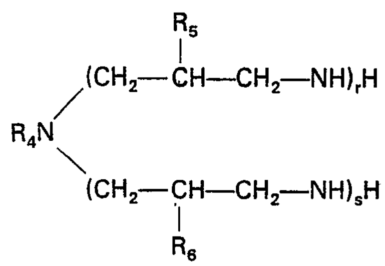

(Va)

in der

$R_4$ für einen gegebenenfalls durch eine Amino- oder Hydroxygruppe substituierten $C_1$—$C_{18}$-Alkylrest

$R_5$ und $R_6$ unabhängig voneinander für Wasserstoff oder eine Methylgruppe stehen und

r und s eine Zahl von 1 bis 20, vorzugsweise 2 bis 5 sind.

Vertreter der Amine Va sind beispielsweise Ethyl-bis-(3-aminopropyl)-amin, 2-Hydroxy-ethyl-bis-(3-aminopropyl)-amin, n-Butyl-bis-(3-amino-propyl)-amin, Tris-(3-aminopropyl)-amin und Methyl-bis-(3-amino-propyl)-amin.

Die Verbindungen II, die nachfolgend auch als Vernetzer bezeichnet werden, sind bekannte Verbindungen (DE—OS 1 795 392). Sie können durch Umsetzung von HCl, Epichlorhydrin und sekundären Aminen nach folgendem Schema erhalten werden

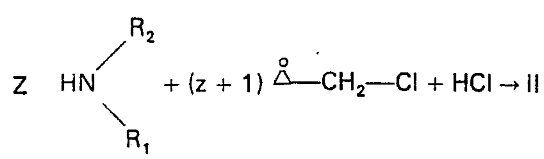

(VI)

$R_1$ und $R_2$ haben dabei die Bedeutung der Formel II. Insbesondere stehen sie für $C_1$—$C_3$-Alkyl oder für Hydroxyethyl.

Vor allem wird Dimethylamin als Amin VI verwendet.

Weitere geeignete Amine sind Diethylamin und Diethanol amin.

Bisher bekannte Verfahren für die Herstellung hochmolekularer Polyalkylenpolyamine sind:

Die Umsetzung von Polyalkylenpolyaminen mit Dihalogenethan und -propan in wäßrigem Medium (GB—PS 775 721), die Unsetzung von Polyalkylenpolyaminen mit Epihalohydrinen bzw. Dihalohydrinen in wäßrigem Medium (US—PS 2 969 302) und die Umsetzungen von Polyethylenpolyaminen mit 1,2-Dichlorethan zu hochviskosen wäßrigen Lösungen (900 mPas bei 24°C) und nachfolgenden thermischen Viskositätsabbau auf 300 bis 600 mPas (DE—PS 2 351 754).

Die Verbindungen II wurden bisher benutzt bei der Herstellung von:

Hochmolekularen Polyamidaminen (DE—OS 1 795 392) und hochmolekularen Polyetheraminen (DE—OS 2 127 082).

Von den bisher bekannten Polyalkylenpolyaminen unterscheiden sich die erfindungsgemäßen Polyalkylenpolyamine dadurch, daß sie von vornherein als freie Basen eine dem Anteil des eingebauten Vernetzers entsprechende Anzahl quaternäre alkylierte Stickstoffatome aufweisen.

Auch relativ niedrig viskose Lösungen (25%ig Lsg., 200—250 mPas bei 25°C) der erfindungsgemäßen Polyalkylenpolyamine zeigen im basischen und sauren Bereich eine noch bessere Wirksamkeit als die nach dem Stand der Technik hergestellten.

Die erfindungsgemäße Herstellung wird insbesondere in wäßriger Lösung durchgeführt. Die im folgenden aufgeführten Prozentangaben entsprechen Gewichtsprozenten.

Die Reaktionstemperaturen liegen bei 0—100°C, insbesondere bei 50—80°C.

Pro Mol basischen Stickstoff werden 0,1—0,5 Mol des Vernetzers eingesetzt, besonders aber 0.15—0,4 Mol. Der pH-Wert der Reaktion liegt oberhalb 6, insbesondere bei 8—11. Die Menge an Vernetzer soll so groß sein, daß sich gerade noch lösliche Polyalkylenpolyamine bilden, vorzugsweise zwischen 80 und 98%, wenn man die Menge mit 100% bezeichnet, die noch gerade zu löslichen Produkten führt. Bei einer zu großen Menge erhält man wasserunlösliche Produkte, die außerhalb des erfindungsgemäßen Verfahrens liegen.

Die jeweils richtige Menge, bei der noch keine wasserunlöslichen Produkte entstehen, läßt sich leicht durch Vorversuche ermitteln.

Durch Ansäuern auf pH-Werte zwischen 2 und 6, vorzugsweise 3,5—5,5 lassen sich die Alkylierungsreaktionen des Vernetzers einfrieren und selbst bei nicht vollständigem Abreagieren des Vernetzers lassen sich bei Überdosierung noch lagerstabile Lösungen erhalten.

Bei der Verwendung der erfindungsgemäßen Polyalkylenpolyamine als Hilfsmittel zur Erhöhung der Retention von Fasern, Füllstoffen und Pigmenten sowie als Entwässerungsbeschleunigungsmittel geht man in an sich bekannter Weise so vor, daß man die erfindungsgemäßen Polyalkylenamine in Form verdünnter wäßriger Lösungen der Papierrohstoffsuspension vor dem Stoffauflauf zusetzt, wobei die Dosierstelle so gewählt wird, daß eine gute Verteilung des Hilfsmittels in der Rohstoffsuspension gesichert ist, aber eine zu lange Kontaktzeit vermieden wird. Die Mengen an Polyalkylenpolyaminen, die zur Erzielung der gewünschten retentierenden Wirkung und/oder entwässerungsbeschleunigenden Wirkung erforderlich sind, lassen sich durch Vorversuche ohne Schwierigkeiten ermitteln; im allgemeinen empfiehlt es sich 0,005 bis 0,5 Gewichtsprozent an Polyalkylenpolyaminen, bezogen auf das Trokkengewicht des Papiers, zu verwenden Der Zusatz von erfindungsgemäßen Polyaminen vor dem Stoffauflauf einer Papiermaschine wirkt sich außerdem vorteilhaft bei der Aufarbeitung der Papiermaschinenabwässer durch Filtration, Flotation oder Sedimentation aus; die koagulierende Wirkung der erfindungsgemäßen Polyamine erleichtert die Abtrennung von Papierstoffbestandteilen aus dem Papiermaschinenabwasser sehr wesentlich.

Bei der Verwendung der erfindungsgemäßen Polyalkylenpolyamine als Hilfsmittel bei der Aufarbeitung von Papiermaschinenabwässern durch Filtration, Flotation oder Sedimentation kann man ebenfalls in an sich bekannter Weise vorgehen, bevorzugt in der Weise, daß man die in Betracht kommenden Umsetzungsprodukte in Form von verdünnten wäßrigen Lösungen dem Papiermaschinenabwasser zweckmäßig vor Eintritt in den Stoffänger zusetzt.

Die Mengen an Polyalkylenpolyaminen, die eine ausreichende Koagulation der in Papiermaschinenabwässern enthaltenden Papierrohstoffbestandteile bewirken, sind nach der Zusammensetzung der Abwässer zu bemessen und lassen sich von Fall zu Fall durch Vorversuche leicht ermitteln; im allgemeinen sind hierfür Mengen von 0,005 bis 2 g Polyamin pro $m^3$ Abwasser ausreichend.

Überraschenderweise zeigen die erfindungsgemäßen Polyalkylenpolyamine besonders im neutralen oder schwach alkalischen Milieu eine Steigerung der Entwässerungsbeschleunigung bei der Papierherstellung und der Retentionswirkung gegenüber den bisher bekannten Polyalkylenpolyaminen.

Als besonders wirkungsvoll haben sich die Polyalkylenpolyamine herausgestellt, die sich aus den unter 2), 3) und 4) beschriebenen niedermolekularen Polyethylenpolyamingemischen aufbauen lassen. Dabei werden pro Mol Stickstoff vorzugsweise 0,15—0,38 Mol Vernetzer eingesetzt.

Einige erfindungsgemäß Polyalkylenpolyamine und ihre Verwendung zur Erhöhung der Retention von Fasern, Füllstoffen und Pigmenten sowie zur Entwässerungsbeschleunigung bei der Papierherstellung sind nachstehend beispielsweise beschrieben.

Die in den folgenden Herstellungs- und Anwendungsbeispielen aufgeführten Prozentangaben entsprechen Gewichtsprozenten.

*Herstellungsbeispiele*

Herstellung bzw. Zusammensetzung der Polyalkylenpolyamine I

Polyalkylenpolyamin a)

Aus dem durch kontinuierliche Umsetzung von Dichlorethan, wäßrigem Ammoniak und Ethylendiamin im Molverhältnis von 1:70:0,4 bei 160—220°C und 100 bar erhaltenem Reaktionsgemisch wird unter Druck zunächst das überschüssige Ammoniak abgetrennt und dann bei 130—135°C mit überschüssiger 50%iger Natronlauge die entstandenen Basen aus ihren Hydrochloriden in Freiheit gesetzt. Dabei destilliert der größte Teil des Wassers und des Ethylendiamins ab, während sich die höhersiedenden Basen flüssig abscheiden. Das so erhaltene Basengemisch enthält neben 15—20% Wasser und 3—5% Ethylendiamin, etwa 15—20% Diethylentriamin, 2—3% Aminoethylenpiperazin, 1% $NH_2—CH_2—CH_2—NHCH_2—CH_2—OH$, 15—18% Triethylentriamin, 3—4% Tetraethylentetramin, 10—14% Tetraethylenpentamin, 6—10% Pentaethylenhexamin sowie rund 10—15% höhere Polyethylenpolyamine und geringe Mengen an Kochsalz und Natriumhydroxid.

Polyalkylenpolyamin b)

Aus dem gemäß a) erhaltenen Basengemisch wird zunächst unter Normaldruck, dann unter vermindertem Druck von etwa 100 mbar das restliche Wasser, Ethylendiamin sowie der größte Teil des Diethylentriamins abdestilliert und das sich abscheidende Kochsalz durch Filtration entfernt.

Polyalkylenpolyamin c)

Aus dem gemäß a) erhaltenen Basengemisch wird außer Wasser, Ethylendiamin und Diethylentriamin auch noch der größte Teil des Triethylentetramins bei einem Endvakuum von etwa 13—20 Millibar destillativ abgetrennt und die sich abscheidenden Anorganika ebenfalls durch Filtration entfernt, wobei die Filtration durch Zusatz von Kieselgur erleichtert und das Amingemisch durch Verwendung von A-Kohle zudem merklich aufgehellt werden kann.

Polyalkylenpolyamin d)

Aus dem gemäß a) erhaltenen Basengemisch wird außer Wasser, Ethylendiamin, Diethylentriamin, Triethylentriamin auch noch der größte Teile des Tetraethylenpentamins bei einem Endvakuum von etwa 13—20 Millibar destillativ abgetrennt und die sich abscheidenden Anorganika ebenfalls durch Filtration entfernt, wobei die Filtration durch Zusatz von Kieselgur erleichtert und das Amingemisch durch Verwendung von A-Kohle zudem merklich aufgehellt werden kann.

Polyalkylenpolyamin e)

Das Gemisch von

$$H_2N—CH_2—CH_2—CH_2—NH—CH_2—CH_2—NH_2 \text{ und}$$

$$H_2N—CH_2—CH_2—CH_2—NH—CH_2—CH_2—NH—CH_2—CH_2—CH_2—NH_2$$

das durch Umsetzung von Ethylendiamin mit 1,5 Mol Acylnitril und anschließender Hydrierung erhalten wurde, wird mit 2 Mol Acrylnitril umgesetzt und anschließend hydriert.

Herstellung der erfindungsgemäßen Polyalkylenpolyamine:

Beispiel 1)

In einem 3-Halskolben werden 23,9 g des unter d) beschriebenen Polyalkylenpolyamingemischs mit einem Basen Äquivalent von 47,8 in 50 g Wasser vorgelegt. Dann werden 100 g wäßrige, 50%ige Lösung eines Vernetzers, der gemäß DE—OS 1 795 397 aus 2 Mol Dimethylamin, 3 Mol Epichlorhydrin und 1 Mol HCl hergestellt wurde, zugegeben. Die Reaktionslösung wird solange bei 55°C gerührt, bis eine Viskosität von 200 mPas bei 55°C erreicht ist. Man verdünnt die Reaktionslösung mit 60 g Wasser und rührt bei 55°C solange weiter, bis eine Viskosität erreicht ist, die bei einer 25%igen Lösung mit pH 4 eine Viskosität von etwa 400 mPas bei 25°C ergibt. Dann kühlt man ab, setzt soviel Wasser und konz. Salzäure zu, daß eine 25%ige Lösung vom pH 4 resultiert (freie Polyalkylenpolyaminbase ohne HCl). Die Viskosität beträgt 390 mPas.

Beispiel 2)

In einem 3-Halskolben werden 21,9 g des unter c) beschriebenen Polyalkylenpolyamingemischs mit einem Basen-Äquivalent von 43,8 mit 40 g Wasser vorgelegt. Dann werden 53 g wäßrige 76,5%ige Lösung eines Vernetzers, der gemäß DE—OS 1 795 392 aus 3 Mol Dimethylamin, 4 Mol Epichlorhydrin und 1 Mol HCl hergestellt wurde, zugegeben und bei 55°C so lange gerührt, bis eine Viskosität von 200 mPas bei 55°C erreicht ist. Dann wird mit 30 g Wasser verdünnt und man rührt bei 55°C so lange weiter, bis eine Viskosität erreicht ist, die bei einer 25%igen Einstellung und einem pH-Wert von 4 eine Viskosität von etwa 250 mPas bei 25°C ergibt. Dann setzt man soviel Wasser und konz. Salzsäure zu, daß eine 25%ige Lösung von pH 4 resultiert (freie Polyalkylenpolyaminbase ohne HCl). Die Viskosität beträgt 270 mPas.

Beispiel 3)

In einem Dreihalskolben werden 23,9 g des unter d) beschriebenen Polyalkylenpolyamingemischs mit einem Basen-Äquivalent von 47,8 und 50 g Wasser vorgelegt. Dann werden 51 g wäßrige 77%ige Lösung eines Vernetzers, der gemäß DE—OS 1 792 342 aus 4 Mol Dimethylamin, 5 Mol Epichlorhydrin und 1 Mol HCl hergestellt wurde, zugesetzt und bei 80°C so lange gerührt, bis eine Viskosität von 100 mPas erreicht ist. Dann wird mit 40 g Wasser verdünnt und man rührt bei 70°C so lange, bis eine Viskosität erreicht ist, die bei einer 25%igen Einstellung und einem pH-Wert von 4 eine Viskosität von etwa 350 mPas bei 25°C ergibt. Dann setzt man soviel Wasser und konz. Salzsäure zu, daß eine 25%ige Lösung von pH 5 (freie Polyalkylenpolyaminbase ohne HCl) resultiert. Die Viskosität beträgt 355 mPas.

Beispiel 4)

In einem Dreihalskolben werden 25,5 g des unter e) beschriebenen Polyalkylenpolyamingemischs mit einem Basenäquivalent von 51 mit 20 g Wasser vorgelegt. Dann gibt man 80 g des in Beispiel 1 verwendeten Vernetzers zu und rührt bei 50°C so lange, bis eine Viskosität von 100 mPas erreicht ist. Dann wird mit 40 g Wasser verdünnt und man rührt bei 55°C so lange, bis eine Viskosität erreicht ist, die bei einer 25%igen Einstellung und einem pH-Wert von 7 eine Viskosität von 200 mPas bei 25°C ergibt. Dann setzt man soviel Wasser und konz. Salzsäure zu, daß eine 25%ige Lösung vom pH 7 resultiert (freie Polyalkylenpolyaminbase ohne HCl). Die Viskosität beträgt 180 mPas bei 25°C.

Beispiel 5)

In einem Dreihalskolben werden 23,9 g des in Beispiel 1 aufgeführten Polyalkylenpolyamingemischs und 12 g Bis-(3-aminopropyl)-methylamin mit 30 g Wasser vorgelegt. Dann gibt man 120 g des in Beispiel 1) aufgeführten Vernetzers zu und rührt bei 80°C so lange, bis eine Viskosität von 250 mPas erreicht ist. Dann wird mit 30 g Wasser verdünnt und man rührt bei 70°C so lange, bis eine Viskosität erreicht wird, die bei einer 25%igen Einstellung und einem pH-Wert von 5 eine Viskosität von 250 mPas bei 25°C ergibt. Dann setzt man soviel Wasser und konz. Salzsäure zu, daß eine 25%ige Lösung vom pH 5 resultiert (freie Polyalkylenpolyaminbase ohne HCl). Die Viskosität beträgt 240 mPas bei 25°C.

Beispiel 6)

In einem Dreihalskolben werden 22 g des unter b) beschriebenen Polyalkylenpolyamingemischs mit einem Basenäquivalent von 44 mit 60 g Wasser vorgelegt. Dann gibt man 74 g des Vernetzers aus Beispiel 2 zu und rührt bei 60°C so lange, bis eine Viskosität von 150 mPas bei 60°C erreicht ist. Man verdünnt mit 40 g Wasser und rührt bei 60°C so lange weiter, bis eine Viskosität erreicht ist, die bei einer 25%igen Einstellung und einem pH-Wert von 4 eine Viskosität von etwa 200 mPas bei 25°C ergibt. Dann setzt man soviel Wasser und konz. Salzsäure zu, daß eine 25%ige Lösung von pH-Wert 4 resultiert (freie Polyalkylenpolyaminbase ohne HCl). Die Viskosität beträgt 190 mPas bei 25°C.

Beispiel 7)

In einem 3-Halskolben werden 21,9 g des unter c) beschriebenen Polyalkylenpolyamingemisches mit einem Basenäquivalent von 43,8 mit 50 g Wasser vorgelegt. Man gibt 65 g des Vernetzers aus Beispiel 3 zu und rührt bei 60°C so lange, bis eine Viskosität von 70 mPas erreicht ist. Dann verdünnt man mit 50 g Wasser und rührt bei 60°C so lange, bis eine Viskosität erreicht ist, die bei einer 25%igen Einstellung und einem pH-Wert von 4,5 eine Viskosität von 250 mPas ergibt. Dann setzt man so viel Wasser und konz. Salzsaure zu, daß eine 25%ige Lösung von pH-Wert 4,5 resultiert (freie Polyalkylenpolyaminbase ohne HCl). Die Viskosität beträgt 265 mPas bei 25°C.

*Anwendungsbeispiele*

Beispiel 1

Auf einer Laborpapiermaschine (Typ Kämmerer) wurden aus 70% gebleichtem Nadelholzsulfitzellstoff und 30% gebleichtem Buchensulfatzellstoff Papiere (ca. 80 g/m²) hergestellt. Dabei wurde einmal im sauren Bereich, zum anderen bei neutralen pH-Werten gearbeitet:

a) Saurer Bereich:

Zusatz von 30% Chine Clay als Füllstoff,
1% Harzleim und
3% Aluminiumsulfat

zur Papiermasse. Der pH-Wert wurde mit Schwefelsäure auf 4,8 eingestellt.

b) Neutraler Bereich:

Zusatz von 30% Calciumcarbonat als Füllstoff
1% synthetischer Leim auf Basis Stearyldiketen (Aquapel(R) 360 XZ der Firma Hercules Inc.)
zur Papiermasse. Der pH-Wert wurde mit Natronlauge auf 7,8 bis 8 eingestellt.

Vor dem Stoffauflauf der Papiermaschine wurden mittels Dosierpumpe die 1%igen wäßrigen Lösungen der 22,5%igen Polyamine 1 bis 7 zudosiert.

Zum Vergleich wurden ebenfalls 1%ige Verdünnungen der bekannten Umsetzungsprodukte von polyfunktionellen Verbindungen mit "Polyamidaminen" (Retentionsmittel I: Einwirkungsprodukte I der DE—PS 1 771 814) als auch mit "Polyalkylenpolyaminen" (Retentionsmittel II: Beispiel B DE—PS 2 351 754), zudosiert. Als Maß für die Retentionswirkung wurde der Feststoffgehalt im Abwasser der Papiermaschine bestimmt. Je geringer dieser Feststoffgehalt, umso besser ist die Retentionswirkung.

Die folgende Tabelle I veranschaulicht, daß die erfindungsgemäße Polyalkylenpolyamine im sauren und im neutralen bis schwach alkalischen Bereich die Wirksamkeit der bekannten Retentionsmittel übertreffen, in vielen Fällen sogar erheblich.

Die Zusatzmengen beziehen sich jeweils auf das Gewicht des lufttrocknenden Zellstoffs sowie auf die 25%ige Lösung des Retentionsmittels.

Tabelle 1

| Retentionsmittel | Zusatzmenge a) % | Trockenrückstand im Abwasser (mg/l)<br>saurer Bereich b) pH 4,8 | neutraler Bereich pH 7,8 |
|---|---|---|---|
| ohne | | 601 | 783 |
| Polyamidamin I | 0,1 | 198 | 384 |
| Polyalkylenamin II | 0,1 | 207 | 199 |
| Polyalkylenamin 1 | 0,1 | 200 | 185 |
| Polyalkylenamin 2 | 0,1 | 185 | 181 |
| Polyalkylenamin 3 | 0,1 | 189 | 179 |
| Polyalkylenamin 4 | 0,1 | 191 | 188 |
| Polyalkylenamin 5 | 0,1 | 193 | 183 |
| Polyalkylenamin 6 | 0,1 | 195 | 187 |
| Polyalkylenamin 7 | 0,1 | 188 | 179 |

*Anwendungsbeispiel 2*

Als Maß für die auf einer Papiermaschine der Praxis zu erwartende Entwässerungsbeschleunigung wurde der Mahlgrad nach Schopper-Riegler bestimmt. Je stärker der Mahlgrad durch das zugesetzte Retentionsmittel erniedrigt wird, umso besser ist die zu erwartende Entwässerungsbeschleunigung.

Ein weiteres Maß für die auf einer Papiermaschine zu erwartende Entwässerungsbeschleunigung ist die sogenannte Entwässerungszeit. Diese wird bestimmt, indem im Mahlgradprüfer nach Schopper-Riegler die Zeit gemessen wird, welche zur Einstellung eines bestimmten Mahlgrades bzw. Wasservolumens im Auslaufbecher erforderlich ist. Je kürzer diese Zeit ist, umso besser ist die erzielbare Entwässerungsbeschleunigung.

Gemischtes Altpapier wurde am Schnellrühr aufgeschlagen und der pH-Wert eingestellt:

a) Saurer Bereich:

Zusatz von 0,5% Aluminiumsulfat, Einstellung von pH 4,5 mit Schwefelsäure.

b) Neutraler Bereich:

Einstellung von pH 7,2 mit Natronlauge.

Zu 200 ml der nach a) oder b) vorbereiteten 1%igen Papierstoff-Suspension wurde jeweils die 1%ige Lösung des Hilfsmittels zugesetzt und mit Wasser auf 1000 ml aufgefüllt. Mit Hilfe des Schopper-Riegler-Gerätes wurde der Mahlgrad bestimmt.

Die Zusatzmengen beziehen sich jeweils auf das Gewicht des lufttrockenen Papierstoffes sowie auf die 25%ige Lösung der Polyamine 1 bis 7.

Die folgende Tabelle 2 veranschaulicht den guten Entwässerungseffekt der erfindungsgemäßen Polyalkylenpolyamine sowohl im sauren als auch im neutralen Bereich. Zum Vergleich wurden ebenfalls die im Anwendungsbeispiel 1 aufgeführten bekannten Retentionsmittel zudosiert.

Neben dem Mahlgrad ist in den Tabellen die Entwässerungszeit in Sek. aufgeführt, die bis zum Erreichen eines bestimmten Mahlgrades notwendig war. Dieser Mahlgrad sollte wenig unter dem Mahlgrad des Papierbreis ohne Zusatz eines Retentionsmittels liegen.

Wird bei der Tabelle 2 bei jedem einzelnen Produkt die Gesamteigenschaft im sauren, im schwach alkalischen Milieu, bei 0,1 und 0,3% Zusatz zusammen betrachtet, so ergibt sich bei den erfindungsgemäßen Produkten eine bessere Entwässerungsbeschleunigung als bei den bekannten.

Tabelle 2

| Beispiel | Zusatz in % | Altpapier Mahlgrad [°SR] | pH 7,5 [sek.] bei 50°SR | Zusatz in % | Altpapier Mahlgrad [°SR] | + 0,5% Alaun + $H_2SO_4$ [Sek.] bei 55°SR |
|---|---|---|---|---|---|---|
| ohne Retentionsmittel | | 59 | | | 56 | |
| I | 0,2 | 57 | 43,5 | 0,1 | 50 | 31,9 |
| | 0,4 | 53 | 32,9 | 0,3 | 45 | 23,3 |
| II | 0,2 | 55 | 35,8 | 0,1 | 52 | 35,0 |
| | 0,4 | 45 | 20,2 | 0,3 | 47 | 25,2 |
| 1 | 0,2 | 54 | 33,2 | 0,1 | 50 | 32,3 |
| | 0,4 | 44 | 18,7 | 0,3 | 44 | 23,0 |
| 2 | 0,2 | 54 | 33,8 | 0,1 | 49 | 29,2 |
| | 0,4 | 43 | 18,7 | 0,3 | 45 | 23,5 |
| 3 | 0,2 | 54 | 32,9 | 0,1 | 49 | 29,4 |
| | 0,4 | 43 | 18,2 | 0,3 | 44 | 22,5 |
| 4 | 0,2 | 55 | 34,1 | 0,1 | 50 | 32,6 |
| | 0,4 | 46 | 20,3 | 0,3 | 46 | 24,2 |
| 5 | 0,2 | 53 | 32,1 | 0,1 | 49 | 31,6 |
| | 0,4 | 44 | 19,8 | 0,3 | 45 | 23,7 |
| 6 | 0,2 | 54 | 34,0 | 0,1 | 51 | 34,7 |
| | 0,4 | 46 | 21,0 | 0,3 | 46 | 24,6 |
| 7 | 0,2 | 53 | 32,7 | 0,1 | 50 | 32,0 |
| | 0,4 | 44 | 19,7 | 0,3 | 44 | 22,8 |

## Patentansprüche

1. Wasserlösliche, nicht selbstvernetzende quaternäre Dialkylammoniumgruppen enthaltende Polyalkylenpolyamine, erhalten durch Umsetzung von Polyalkylenpolyaminen der allgemeinen Formel

$$H_2N-[CH_2-\underset{\substack{|\\R}}{CH}-(CH_2)_y-NH]_x-H \qquad (I)$$

in der
R Wasserstoff oder Methyl,
Y gleich oder verschieden die Zahl 0 oder 1 und
x eine Zahl von 2 bis 15 bedeuten,
mit bifunktionellen Verbindungen der allgemeinen Formel

$$[Cl-(CH_2-\underset{\substack{|\\OH}}{CH}-CH_2-\overset{\substack{(+)R_1\\|}}{\underset{\substack{|\\R_2}}{N}})_z-CH_2-\underset{\substack{|\\OH}}{CH}-CH_2-Cl]\ z.Cl^{(-)} \qquad (II)$$

in der
z eine ganze Zahl von 1 bis 6
$R_1$, $R_2$ niederes Alkyl oder niederes Hydroxyalkyl bedeuten.

2. Wasserlösliche Polyalkylenpolyamine gemäß Anspruch 1, erhalten durch Umsetzung von Mischungen, die bei der Reaktion von 1 Mol 1,2-Dichlorethan mit 6—30 Mol Ammoniak anfallen, mit den in Anspruch 1 genannten bifunktionellen Verbindungen.

3. Wasserlösliche Polyalkylenpolyamine gemäß Ansprüchen 1 und 2, erhalten durch Umsetzung von Polyalkylenpolyaminen der in Anspruch 1 angegebenen Formel mit wäßrigen Lösungen von bifunktionellen Verbindungen, die bei der Reaktion von 1 Mol HCl, Z Mol Dialkylamin und (Z + 1) Mol Epichlorhydrin (wobei Z 1—6 bedeutet) anfallen.

4. Wasserlösliche Polyalkylenpolyamine gemäß Anspruch 3, erhalten durch Umsetzung von Polyalkylenpolyaminen der in Anspruch 1 angegebenen Formel mit wäßrigen Lösungen von bifunktionellen Verbindungen, die bei der in Anspruch 3 angegebenen Reaktion mit Dimethylamin als Dialkylamin anfallen.

5. Wasserlösliche Polyalkylenpolyamine gemäß Anspruch 4, erhalten durch Umsetzen von Polyalkylenpolyaminen der in Anspruch 1 angegebenen Formel mit 0,1—0,5 Mol bifunktioneller Verbindung je Mol Basenstickstoff des Polyalkylenpolyamins.

6. Wasserlösliche Polyalkylenpolyamine gemäß Ansprüchen 1—5, dadurch gekennzeichnet, daß sie in Form 10%iger wäßriger Lösungen eine Viskosität von mindestens 30 mPas bei 25°C aufweisen.

7. Verfahren zur Herstellung wasserlöslicher Polyalkylenpolyamine gemäß Anspruch 1, dadurch gekennzeichnet, daß die Umsetzung der in Anspruch 1 genannten Reaktionspartner in wäßrigem Medium bei Temperaturen von 0 bis 100°C, einer Gesamtkonzentration von 10 bis 60% und pH-Werten oberhalb 6 vorgenommen werden.

8. Verwendung der wasserlöslichen Polyalkylenpolyamine gemäß Anspruch 1 als Hilfsmittel zur Erhöhung der Retention von Fasern, Füllstoffen und Pigmenten sowie als Entwässerungsbeschleunigungsmittel bei der Papierherstellung und zur Aufarbeitung von Papiermaschinenabwässern durch Filtration, Sedimentation und Flotation.

9. Hilfsmittel zur Erhöhung der Retention von Fasern, Füllstoffen und Pigmenten sowie Entwässerungsbeschleunigungsmittel bei der Papierherstellung und zur Aufarbeitung von Papiermaschinenabwässern durch Filtration, Sedimentation und Flotation enthaltend als wirksamen Bestandteil wasserlösliche Polyalkylenpolyamine gemäß Anspruch 1.

## Revendications

1. Polyalkylène-polyamines hydrosolubles contenant des groupes dialkylammonium quaternaires ne subissant pas d'autoréticulation, ces polyalkylène-polyamines étant obtenues par réaction de polyalkylène-polyamines de formule générale:

$$H_2N-[CH_2-\underset{\substack{|\\R}}{CH}-(CH_2)_y-NH]_x-H \qquad (I)$$

dans laquelle

R représente un atome d'hydrogène ou un groupe méthyle,
les y sont identiques ou différents et représentent chacun 0 ou 1, et
x représente un nombre de 2 à 15,
avec des composés difonctionnels de formule générale

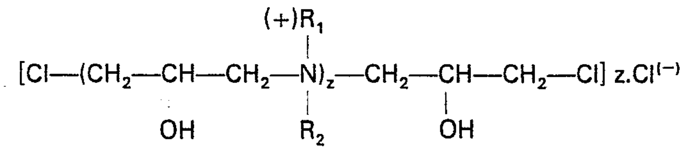 (II)

dans laquelle
z est un nombre entier de 1 à 6,
$R_1$ et $R_2$ représent chacun un groupe alkyle inférieur ou un groupe hydroxyalkyle inférieur.

2. Polyalkylène-polyamine hydrosolubles suivant la revendication 1, caractérisées en ce qu'elles sont obtenues par réaction de mélanges formés lors de la réaction de 1 mole de 1,2-dichloréthane avec 6—30 moles d'ammoniaque, avec les composés difonctionnels mentionnés dans la revendication 1.

3. Polyalkylène-polyaminés hydrosolubles suivant les revendications 1 et 2, caractérisées en ce qu'elles sont obtenues par réaction de polyalkylène-polyamines répondant à la formule indiquées dans la revendication 1, avec des solutions aqueuses de composés difonctionnels formés lors de la reaction de 1 mole de HCl, de Z moles d'une dialkylamine et de (Z + 1) moles d'épichlorhydrine (Z = 1—6).

4. Polyalkylène-polyaminés hydrosolubles suivant la revendication 3, caractérisées en ce qu'elles sont obtenues par reaction de polyalkylène-polyamines répondant à la formule indiquée dans la revendication 1, avec des solutions aqueuses de composés difonctionnels formés lors de la réaction indiquée dans la revendication 3 avec de la diméthylamine comme dialkylamine.

5. Polyalkylène-polyamines hydrosolubles suivant la revendication 4, caractérisées en ce qu'elles sont obtenues par réaction de polyalkylène-polyamines répondant à la formule indiquée dans la revendication 1 avec 0,1—0,5 mole d'un composé difonctionnel par mole d'azote basique de la polyalkylène-polyamine.

6. Polyalkylène-polyamines hydrosolubles suivant les revendications 1—5, caractérisées en ce que, sous forme de solutions aqueuses à 10%, elles ont une viscosité d'au moins 30 mPas à 25°C.

7. Procédé de préparation de polyalkylène-polyamines hydrosolubles suivant la revendication 1, caractérisé en ce qu'on effectue la réaction des partenaires réactionnels mentionnés dans la revendication 1, en milieu aqueux, à des températures de 0 à 100°C, à une concentration totale de 10 à 60% et à des pH supérieurs à 6.

8. Utilisation des polyalkylène-polyamines hydrosolubles suivant la revendication 1 comme adjuvants en vue d'augmenter la rétention des fibres, des charges et des pigments, ainsi que comme accélérateurs de déshydratation lors de la fabrication du papier et pour le traitement des eaux résiduaires des machines de fabrication du papier par filtration, sédimentation et flottation.

9. Adjuvants en vue d'augmenter la rétention des fibres, des charges et des pigments, ainsi que des accélérateurs de déshydratation lors de la fabrication du papier et pour le traitement des eaux résiduaires des machines de fabrication du papier par filtration, sédimentation et flottation, ces adjuvants et accélérateurs contenant, comme constituant actif, des polyalkylène-polyamines hydrosolubles suivant la revendication 1.

**Claims**

1. Water-soluble polyalkylenepolyamines which are not self-crosslinking and contain quaternary dialkylammonium groups, and are obtained by reaction of polyalkylenepolyamines of the general formula

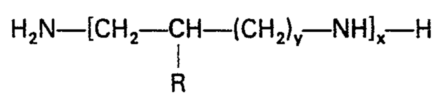 (I)

in which
R denotes hydrogen or methyl,
y denotes the number 0 or 1 and the y's may be identical or different and
x denotes a number from 2 to 15,
with bifunctional compounds of the general formula

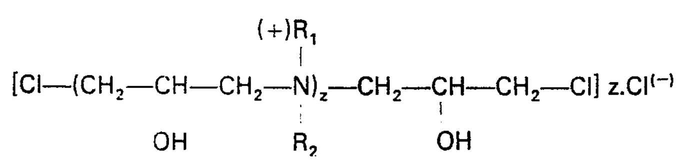 (II)

in which

z denotes an integer from 1 to 6 and
$R_1$ and $R_2$ denote lower alkyl or lower hydroxyalkyl.

2. Water-soluble polyalkylenepolyamines according to Claim 1, obtained by reacting mixtures which are produced on reaction of 1 mol of 1,2-dichloroethane with 6 to 30 mols of ammonia, with the bifunctional compounds indicated in Claim 1.

3. Water-soluble polyalkylenepolyamines according to Claims 1 and 2, obtained by reacting polyalkylenepolyamines of the formula indicated in Claim 1 with aqueous solutions of bifunctional compounds which are produced on reaction of 1 mol of HCl, Z mols of dialkylamine and (Z + 1) mols of epichlorohydrin (wherein Z denotes 1 to 6).

4. Water-soluble polyalkylenepolyamines according to Claim 3, obtained by reacting polyalkylenepolyamines of the formula indicated in Claim 1 with aqueous solutions of bifunctional compounds which are produced by the reaction indicated in Claim 3, dimethylamine being employed as the dialkylamine.

5. Water-soluble polyalkylenepolyamines according to Claim 4, obtained by reacting polyalkylenepolyamines of the formula indicated in Claim 1 with 0.1 to 0.5 mols of the bifunctional compound per mol of basic nitrogen of the polyalkylenepolyamine.

6. Water-soluble polyalkylenepolyamines according to Claims 1—5, characterized in that in the form of 10% strength aqueous solutions they have a viscosity of at least 30 mPas at 25°C.

7. Process for the preparation of water-soluble polyalkylenepolyamines according to Claim 1, characterised in that the reaction of the reactants indicated in Claim 1 is effected in an aqueous medium at temperatures of 0 to 100°C, at a total concentration of 10 to 60%, and at pH values above 6.

8. Use of the water-soluble polyalkylenepolyamines according to Claim 1 as auxiliaries for increasing the retention of fibres, fillers and pigments and as drainage accelerators in the manufacture of paper, and for the working up of papermaking machine waste waters by filtration, sedimentation and flotation.

9. Auxiliaries for increasing the retention of fibres, fillers and pigments, as well as drainage accelerators in the manufacture of paper and for working up papermaking machine waste waters by filtration, sedimentation and flotation, which contain, as the active constituent, water-soluble polyalkylenepolyamines according to Claim 1.